# EUROPEAN PATENT APPLICATION

(11) **EP 4 797 474 A1**
(43) Date of publication of application: **26.08.2026**
(21) Application number: 26153102.4
(22) Date of filing: 21.01.2026
(51) Int. Cl.: H02H 3/087, H02M 1/32, H02H 9/02

(54) **BIDIRECTIONAL CURRENT LIMITING CIRCUITS**

(30) Priority: 21.02.2025 GB 202502553
(71) Applicant: Rolls-Royce plc, London N1 9FX (GB)
(72) Inventor: Gajanayake, Chandana J, DE24 8BJ Derby (GB); Trainer, David R(, David R, DE24 8BJ Derby (GB); Valappil, Muneer, DE24 8BJ Derby (GB); Mohamed Halick, Mohamed Sathik, DE24 8BJ Derby (GB); Kotturu, Janardhana, DE24 8BJ Derby (GB)
(74) Representative: Rolls-Royce plc

(57) **Abstract**

This disclosure relates to bidirectional current limiting circuits for use in aircraft electric power distribution systems. Example embodiments include a bidirectional current limiting circuit (500a-c) comprising first and second JFETs (501, 502) connected between first and second terminals (503, 504), wherein: the first terminal (503) is connected to a drain of the first JFET (501) and to a gate of the second JFET (502) via a first biasing element (505, 701); he second terminal (504) is connected to a drain of the second JFET (502) and to a gate of the first JFET (501) via a second biasing element (506, 702); and a source of the first JFET (501) is connected to a source of the second JFET (502).

## Description

### CROSS REFERENCE TO RELATED APPLICATIONS

This represents the first application directed towards the subject-matter.

### FIELD

This disclosure relates to bidirectional current limiting circuits for use in aircraft electric power distribution systems.

### BACKGROUND

With increasing application of electrical systems in aircraft and a progression towards full electric and hybrid aircraft propulsion systems, the use of energy storage systems in combination with DC electric power distribution has gained increased use. Fault protection and reliability are important factors in such systems. With electrical power in such systems being provided by power electronics converters in combination with DC electrical loads and large DC capacitors, in the event of a DC short circuit it may be difficult to prevent large fault currents from discharging into a fault location, which may pose a safety issue for the electrical load and the power electronics converters. A further problem in aircraft applications is that some loading branches may need to have traditional protection devices, which may not be easily replaced.

Traditionally, electrical machines are designed with high impedance to allow for fault current management. This may, however, be limited in protecting power electronics used in rectification. With increased penetration of battery energy storage system making this even more demanding, DC/DC converters may be employed. Both rectifiers and DC/DC converters require large DC link capacitors, sudden discharge of which during a short circuit event can create high currents that need to be dissipated until damped within the network. High transient currents may damage diodes of rectifiers and other components in the distribution network. To enable protection during a short circuit event, it is required to hold a fault current for a sustained period in some applications.

### SUMMARY

According to a first aspect there is provided a bidirectional current limiting circuit comprising first and second JFETs connected between first and second terminals, wherein:
the first terminal is connected to a drain of the first JFET and to a gate of the second JFET via a first biasing element;
the second terminal is connected to a drain of the second JFET and to a gate of the first JFET via a second biasing element; and
a source of the first JFET is connected to a source of the second JFET.

The first biasing element may be a first diode having an anode connected to the gate of the second JFET and a cathode connected to the drain of the first JFET. The second biasing element may be a second diode having an anode connected to the gate of the first JFET and a cathode connected to the drain of the second JFET.

The bidirectional current limiting circuit may further comprise a common source resistor connected between a source of the first JFET and a source of the second JFET.

According to a second aspect there is provided a bidirectional current limiting circuit comprising:
first and second JFETs connected between first and second terminals, wherein the first terminal is connected to a drain of the first JFET, the second terminal is connected to a drain of the second JFET, a source of the first JFET connected to a gate of the second JFET and a source of the second JFET connected to a gate of the first JFET; and
a common source resistor connected between a source of the first JFET and a source of the second JFET.

The first biasing element may be a first resistor and the second biasing element a second resistor, the bidirectional current limiting circuit further comprising:
a third resistor connected between the source of the first JFET and the gate of the second JFET;
a fourth resistor connected between the source of the second JFET and the gate of the first JFET; and
a common source resistor connected between a source of the first JFET and a source of the second JFET.

The bidirectional current limiting circuit may further comprise a bidirectional transient voltage suppressor connected between the first and second terminals.

The bidirectional transient voltage suppressor may comprise a pair of opposed avalanche diodes.

The bidirectional transient voltage suppressor may comprise a voltage-dependent resistor.

The bidirectional current limiting circuit may further comprise a damping resistor connected in series with the bidirectional transient voltage suppressor.

The bidirectional current limiting circuit may further comprise a mechanical contactor connected in series with the first or second terminal.

The bidirectional current limiting circuit may further comprise a controller configured to control operation of the mechanical contactor.

The first and second JFETs may be n-channel JFETs.

According to a third aspect there is provided an electrical power system comprising:
a power electronics converter connected between an electrical power source and an electrical load; and
a bidirectional current limiting circuit according to the first or second aspect connected between the power electronics converter and the electrical load or between the power electronics converter and the electrical power source.

The electrical power source may comprise an AC electric machine, the bidirectional current limiting circuit connected between the power electronics converter and the electrical load.

According to a fourth aspect there is provided an aircraft electric power distribution system comprising:
an electrical power system according to the third aspect; and
a DC power distribution bus connected to the DC terminals of the power electronics converter via the bidirectional current limiting circuit.

### BRIEF DESCRIPTION OF THE DRAWINGS

Embodiments will now be described by way of example only with reference to the accompanying drawings, in which:
FIG. 1 is a schematic diagram of an example electric power distribution system for an aircraft;
FIG. 2 is a schematic diagram of an example electrical power system;
FIG. 3 is a schematic diagram of an electric power converter circuit comprising a current limiting device;
FIG. 4 is a schematic circuit diagram of an example bidirectional current limiting circuit;
FIG. 5A is a schematic circuit diagram of an example bidirectional current limiting circuit;
FIG. 5B is a schematic circuit diagram of a further example bidirectional current limiting circuit;
FIG. 5C is a schematic circuit diagram of a further example bidirectional current limiting circuit;
FIG. 6A is a schematic circuit diagram of a further example bidirectional current limiting circuit;
FIG. 6B is a schematic circuit diagram of a further example bidirectional current limiting circuit;
FIG 6C is a schematic circuit diagram of a further example bidirectional current limiting circuit;
FIG 7A is a schematic circuit diagram of a further example bidirectional current limiting circuit;
FIG. 7B is a schematic circuit diagram of a further example bidirectional current limiting circuit;
FIG. 7C is a schematic circuit diagram of a further example bidirectional current limiting circuit;
FIG. 8A is a schematic circuit diagram of an example bidirectional current limiting circuit with a mechanical contactor;
FIG. 8B is a schematic circuit diagram of a further example bidirectional current limiting circuit with a mechanical contactor;
FIG. 9A is a schematic circuit diagram of a further example bidirectional current limiting circuit with a mechanical contactor; and
FIG. 9B is a schematic circuit diagram of a further example bidirectional current limiting circuit with a mechanical contactor.

### DETAILED DESCRIPTION

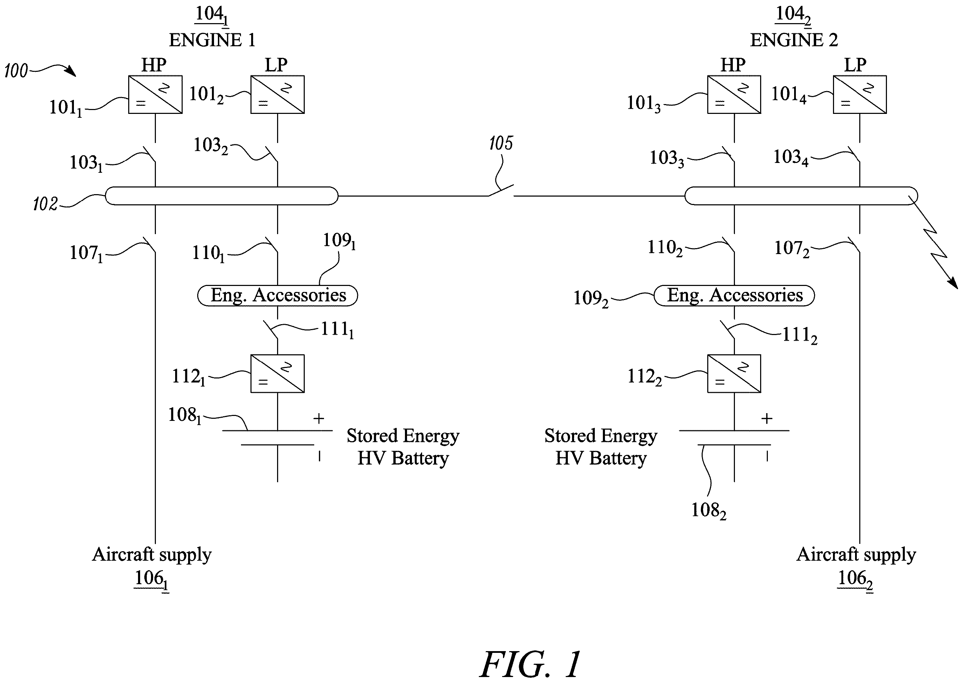

FIG. 1 illustrates an example electrical power distribution system 100 for an aircraft. The system 100 comprises AC:DC converters 101₁₋₄ connected between first and second engines and a DC distribution bus 102. In this example, an AC:DC converter is connected between the DC distribution bus 102 and an electrical machine connected to each of an HP and LP spool of each engine. Each converter 101₁₋₄ is connectable to the DC distribution bus 102 via a respective contactor 103₁₋₄. The DC distribution bus 102 may be separated into first and second sides 104₁, 104₂ by a contactor 105, allowing each side to operate independently or in combination. Each side provides DC power to an aircraft electrical supply 106₁, 106₂, which provides electrical power to various onboard electrical systems. Each side may be isolated from the aircraft supply by further contactors 107_{1, 2}. Each side of the DC distribution bus 102 is connectable to a battery 108_{1,2} and may also be connected to one or more engine accessories 109_{1,2} (e.g. other electrical loads such as oil or fuel pumps or vacuum solenoid valves), connections to the batteries 108_{1,2} being made via further contactors 110_{1,2}, 111_{1,2} and DC:DC converters 112_{1,2}. Electrical power can thereby be extracted from the DC distribution bus 102 and stored in either or both of the batteries 108_{1,2} or provided to the DC distribution bus 102 from either or both of the batteries 108_{1,2} via the DC:DC converters 112_{1,2}.

In the electrical power distribution system 100 of FIG. 1, because power can flow in either direction to and from the batteries 108₁, 108₂ and a short circuit on one side of the system 100 may affect the other side, current limiting devices with a bidirectional capability are required.

With electric aircraft DC distribution systems having multiple sources and loads connected via a DC distribution network, each load will need to be protected using traditional protection devices that will be required to sustain a continued fault current to clear the fault condition under defined critical operating conditions. If the system is equipped with high power rated battery energy storage and/or electrical machines with lower impedance, large fault currents may be generated, which can damage the power converters as well as other components in the distribution system. A fault current limitation function is therefore required.

Solid state power controllers enable fast protection in the event of faults but may not be able to provide galvanic isolation and may not be able to limit the fault current. Various solutions have been developed for providing current limiting capabilities, for example as disclosed in US 2023/136376 A1, US 2023/134788 A1, US 2023/140274 A1, US 2023/137501 A1, US 2022/281611 A1, US 2022/281609 A1 and US 2022/281607 A1, the contents of which are incorporated herein by reference.

Current limiting devices (CLDs) are known for use in high power applications to provide current limiting capabilities in the event of a fault current. CLDs may comprise silicon or silicon carbide JFETs (Junction Field Effect Transistors) configured as 2-terminal devices which saturate at a near constant current level. Such devices may be referred to as "constant-current" diodes. These devices may be used to limit current in the event of an electrical system fault or to limit an inrush current when charging a capacitor. In their current limiting mode of operation, a CLD develops a voltage that opposes the flow of current in its saturation region.

One problem with JFET-based current limiting devices is that, in high voltage and high current applications, multiple devices need to be required to be connected in parallel to carry higher currents. Such devices are physically large. which may put a practical limitation on potential adoption due to increased size and weight. Another limitation is that a steady state power loss is incurred due to a requirement to have a series connected resistor to bias the JFET gate.

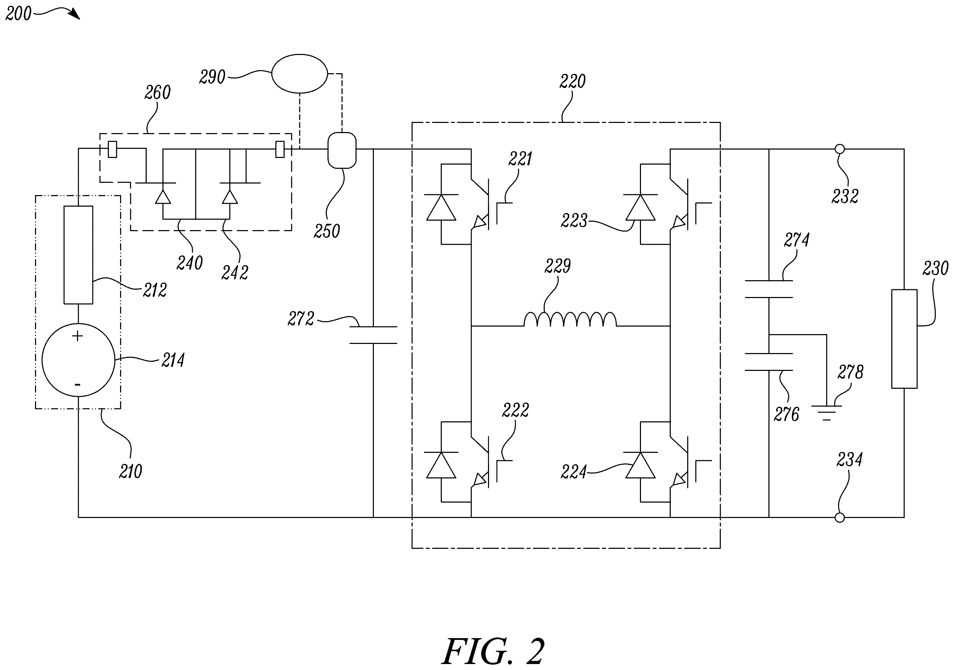

An example electrical power system 200, based on the disclosure of US 2023/136376 A1 cited above, is illustrated in FIG. 2, in which a bidirectional current limiting device 260 is provided between an electrical power source 210 and a DC:DC power electronics converter 220. The electrical power source 210 is represented by a voltage source 214 and a resistor 212. A first DC capacitor 272 is connected across the power electronics converter 220 at the electrical power source side. The power electronics converter 220 is connected to an electrical network 230 connected between terminals 232, 234. Second and third DC capacitors 274, 276 are connected between the terminals 232, 234 and a ground connection 278. The power electronics converter 220 is thereby arranged to provide a differential voltage supply across the network 230 relative to a central ground connection 278. In other arrangements the power electronics converter 220 may operate to provide a single ended voltage supply across the network 230. The power electronics converter 220 comprises first, second, third and fourth transistors 221, 222, 223, 224 and an inductor coil 229.

The bidirectional current limiting device 260 comprises a pair of JFETs 240, 242 arranged as current limiting diodes. A controllable circuit interruption device 250 is connected between the bidirectional current limiting device 260 and the power electronics converter 220, operation of the circuit interruption device 250 being controlled by a controller 290. The power electronics converter 220 of FIG. 2 may for example correspond to one of the DC:DC converters 112_{1,2} illustrated in FIG. 1.

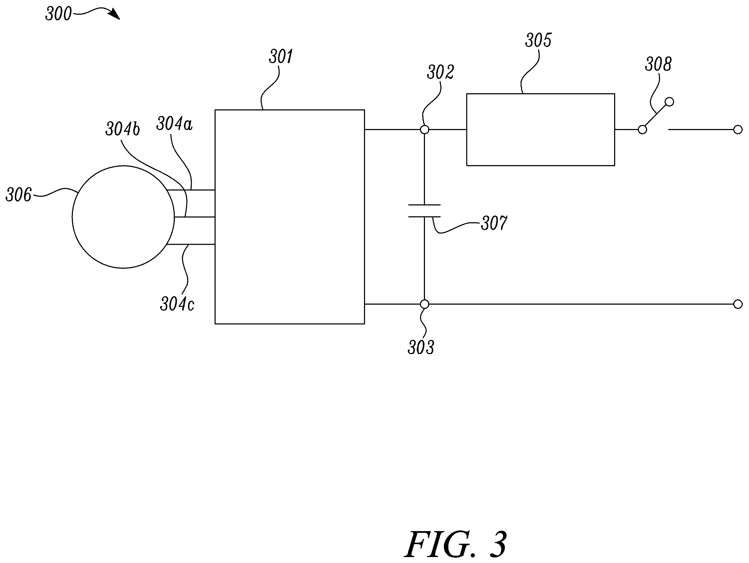

An alternative electrical power system 300 is illustrated in FIG. 3, in which a bidirectional current limiting device (CLD) 305 is connected to an power electronics converter 301 connected to an AC electric machine 306, which may operate as a motor or generator. The power electronics converter 301 operates to convert the AC output supply from the electric machine 306, which in this example comprises three windings 304a-c, to a DC supply across DC terminals 302, 303. The power electronics converter 301 may also operate in reverse, i.e. to convert a DC power supply to an AC supply to drive the electric machine 306 as a motor. The CLD 305 is connected between DC terminal 302 and a DC distribution network (e.g. the DC distribution bus 102 in FIG. 1). A DC link capacitor 307 is connected across the DC terminals 302, 303 for smoothing of the DC supply. A mechanical contactor 308 may be provided for connection to, or isolation from, the DC distribution network.

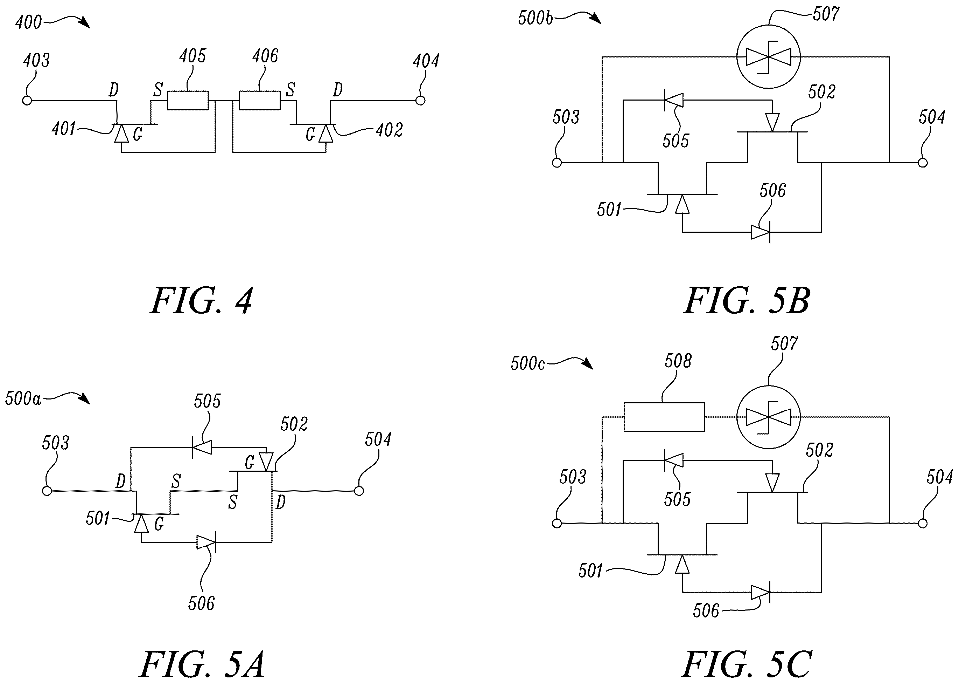

An alternative representation of a bidirectional current limiting device 400 of the type used in the system 200 of FIG. 2 or the system 300 of FIG. 3 is illustrated in FIG. 4. The bidirectional current limiting device 400 comprises first and second diode-connected JFETs 401, 402 connected in series between first and second terminals 403, 404. A biasing resistor 405, 406 is connected between source and gate connections of each JFET 401, 402. The device 400 enables current to flow in either direction between the first and second terminals 403, 404. Once the current exceeds a threshold level, which is defined by the value of the biasing resistors 405, 406, one of the JFETs 401, 402 operates to restrict the flow of current through the device 400.

One drawback of such passive JFET-based current limiting devices is, when used in high voltage and high current applications, multiple devices may need to be connected in parallel to carry a higher current. This puts a practical limitation on potential adoption of the technology. Another limitation is a steady state power loss due to the requirement to have series connected resistors 405, 406 to bias the gate of each JFET 401, 402. For a bidirectional device two such resistors 405, 406 are required in series, which further increases the steady state power loss.

FIGs. 5A-5C illustrate examples of bidirectional current limiting circuits 500a-c that also include two JFETs 501, 502 arranged in series between first and second terminals 503, 504 but in a different arrangement to the CLD 400 illustrated in FIG. 4. In FIG. 5a, the bidirectional current limiting circuit 500a includes first and second JFETs 501, 502 with a source of the first JFET 501 connected to a source of the second JFET 502. The first terminal 503 is connected to a drain of the first JFET 501 and to a gate of the second JFET 502 via a first biasing element 505. The second terminal 504 is connected to a drain of the second JFET 502 and to a gate of the first JFET 501 via a second biasing element 505. In this example, as with the other examples in FIG. 5B and FIG. 5C, the first and second biasing elements are diodes 505, 506. An anode of the first diode 505 connected to the gate of the second JFET 502 and a cathode of the first diode 505 connected to the drain of the first JFET 501. An anode of the second diode 506 is connected to the gate of the first JFET 501 and a cathode of the second diode 506 is connected to a drain of the second JFET 502. The first diode 505 prevents the gate of the second JFET 502 from being energized when the first JFET 501 is conducting. Similarly, the second diode 506 prevents the gate of the first JFET 501 from being energized when the second JFET 502 is conducting.

An advantage of this topology is there is no need for any external source resistance, the circuit only comprising device resistance. This results in a reduced power loss during normal operation. When a fault is detected in either side, the corresponding JFET is activated to limit the fault current. If for example a fault is detected in the forward side, the first JFET 501 is activated to limit the fault current. The reduction of fault current depends on the device resistance of the second JFET 502, which is connected in series with the gate and source of the first JFET 501. The voltage drop across the gate and source terminals of the first JFET 501 determines the fault current limiting level. Similarly, if the fault is detected in the reverse direction, the second JFET 502 is activated, and the gate-source voltage of the second JFET 502 is determined by the device resistance of the first JFET 501.

FIG. 5B and 5C illustrate alternative example bidirectional current limiting circuits 500b, 500c in which an alternative current path is provided between the first and second terminals 503, 504. In each case, a bidirectional transient voltage suppressor (TVS) 507 is connected between the first and second terminals 503, 504. In FIG. 5C a damping resistor 508 is connected in series with the bidirectional transient voltage suppressor 507. The bidirectional TVS 507 may comprise a pair of opposed avalanche diodes or may comprise a voltage-dependent resistor (varistor). In each of these examples, when an over current or short circuit occurs, an increased voltage drop across one of the JFETs 501, 502 will trigger the TVS 507 when the voltage reaches its breakdown voltage. Connecting the TVS 507 in series with a damping resistor 508 reduces the transient current and adds a dissipative element in the alternative current path. This also allows for more design flexibility to accommodate the limitations of commercially available components.

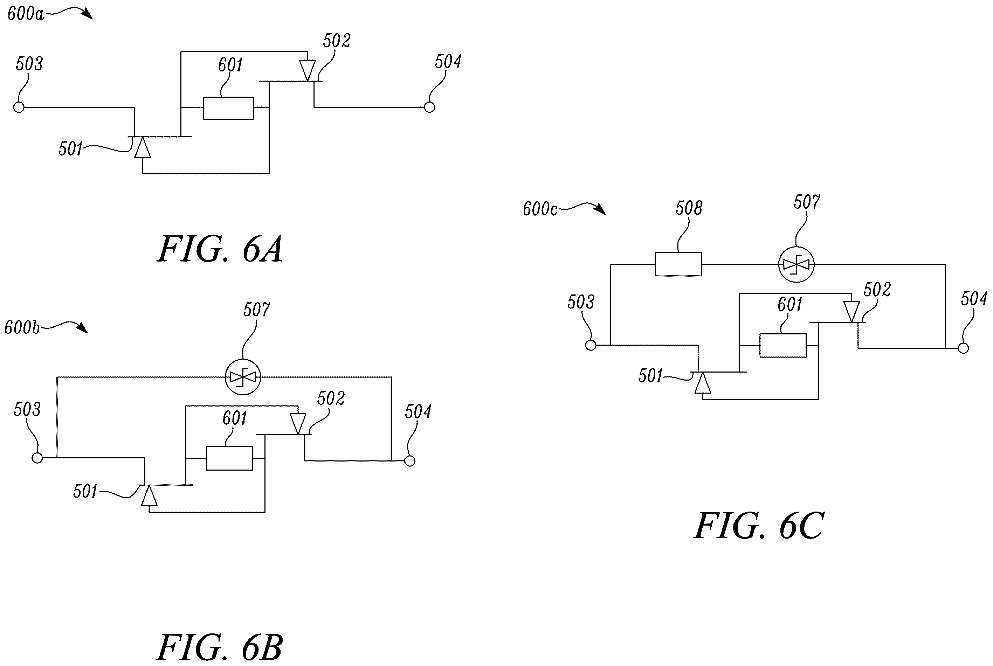

FIG. 6A illustrates an alternative example of a passive bidirectional current limiting circuit 600a. As with the examples in FIGs. 5A-5C. the first and second JFETs 501, 502 are connected between first and second terminals 503, 504, with the first terminal 503 connected to a drain of the first JFET 501 and the second terminal 504 connected to a drain of the first JFET 501. A source of the first JFET 501 is connected to a gate of the second JFET 502. A source of the second JFET 502 is connected to a gate of the first JFET 501. A common source resistor 601 is connected between a source of the first JFET 501 and a source of the second JFET 502. Having a single common source resistance in the bidirectional current limiting circuit 600a provides an additional source resistance that will provide more voltage drop across the gate and source of both JFETs 501, 502 in either direction. This will enable the current limiting circuit to have control of a wide range of fault currents, enabling the circuit to limit more current compared to the previous examples.

FIG. 6B and FIG. 6C illustrate alternative examples in which a TVS 507 is provided in an additional current path between the first and second terminals, with a series connected resistor 508 in the example in FIG. 6C. As with the examples in FIG. 5B and FIG. 5C, the current diversion path provides more design flexibility given the limitations of commercially available components.

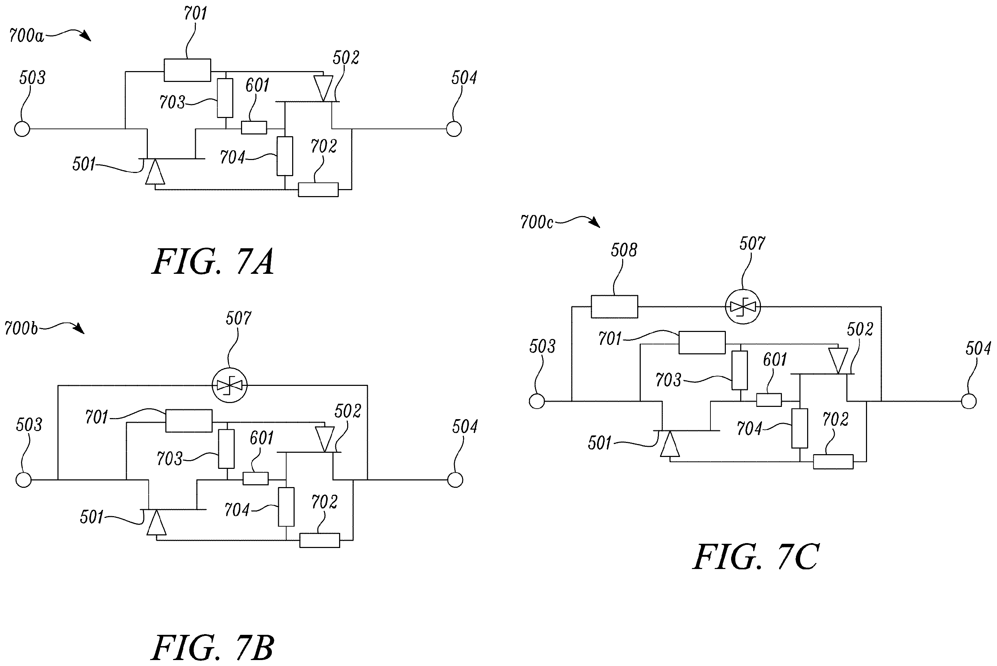

FIG. 7A illustrates a further example bidirectional current limiting device in which the first biasing element is a first resistor 701 connected between the first terminal 503 and a gate of the second JFET 502 and the second biasing element is a second resistor 702 connected between the second terminal 504 and a gate of the first JFET 501. A third resistor 703 is connected between the source of the first JFET 501 and the gate of the second JFET 502. A fourth resistor 704 is connected between the source of the second JFET and the gate of the first JFET 501. As with the examples in FIGs. 6A-6C, a common source resistor 601 is connected between a source of the first JFET 501 and a source of the second JFET 502. Having an additional device resistance to the common source resistor 601 in this example bidirectional current limiting circuit 700a functions to provide more voltage drop across the JFETs 501, 502. This enables the current limiting circuit 700a to have control over a wider range of fault currents. The effect of this is that the circuit can limit more current compared to the previous examples.

The examples in FIG. 7B and FIG. 7C add an additional current path with a TVS 507 and, in FIG. 6C, a series damping resistor 508, the effect of which is similar to that of the examples in FIG. 6B and FIG. 6C.

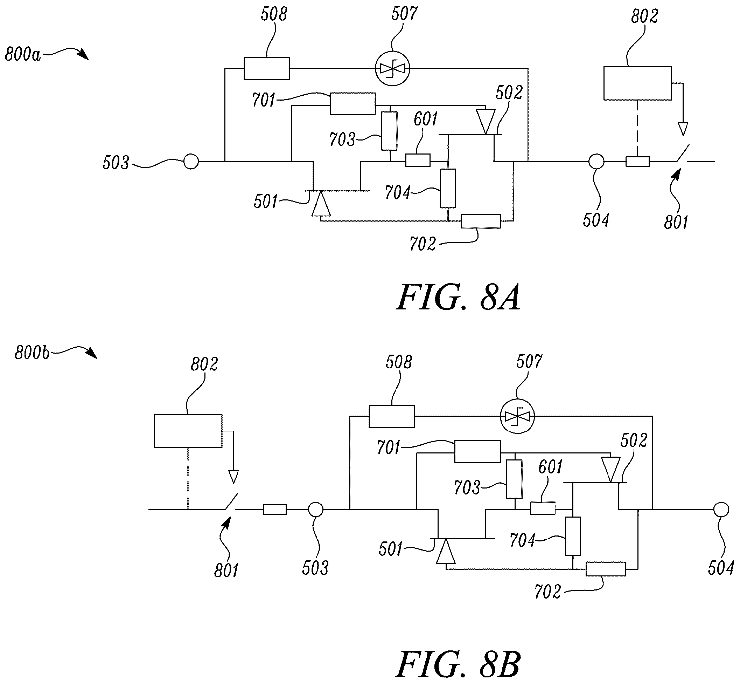

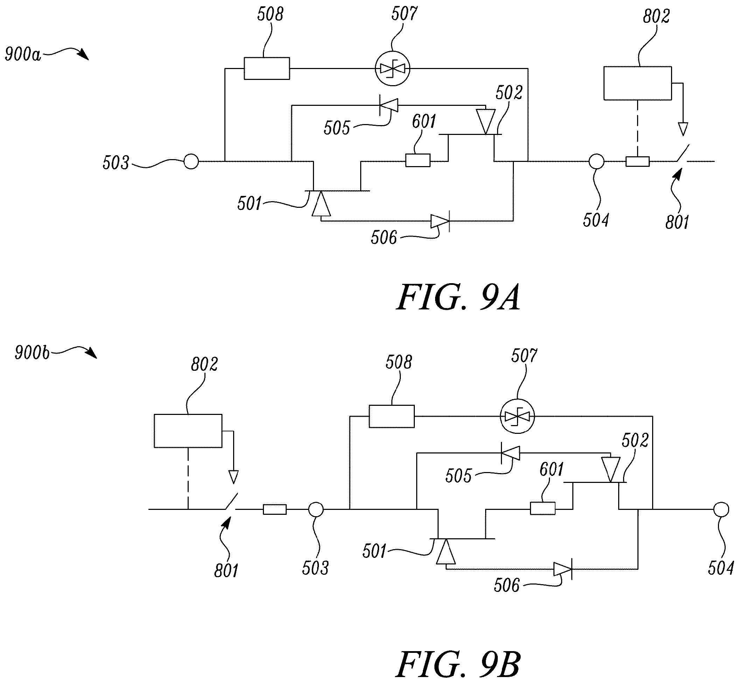

FIGs. 8A and 8B illustrate the example bidirectional current limiting circuit 700c of FIG. 7C connected in series with a mechanical contactor 801, with the mechanical contactor 801 connected in series with the second terminal 504 in FIG. 8A and the first terminal 503 in FIG. 8B. FIGs. 9A and 9B illustrate corresponding arrangements with bidirectional current limiting devices similar to that in FIG. 5C. A controller 802 controls operation of the mechanical contactor 801 in each case. Adding a mechanical contactor 801 can provide for galvanic isolation and remove the risk associated with the JFETs 501, 502 being normally ON. The mechanical contactor 801 provides for complete isolation but its response time is relatively long. During a fault, sudden changes in loads or any transients result in the CLD operating first to limit the current until the mechanical contactor 801 has time to operate. A fault could lead to an increase in fault current to levels that may be beyond the breaking current of the mechanical contactor. If the current is too high, the mechanical contactor can be welded and become non-operational. A further reason for the fault current limiter therefore is to allow a smaller mechanical contactor to be used in the system by preventing such a high current rise.

In general, powering up normally ON JFETs can cause a sudden rise in current that may damage components connected to the system. However, in the examples illustrated in FIGs. 8A, 8B, 9A and 9B, providing a common source resistor 601 along with a damping resistor 508 provides more control over a surge current flowing through the circuit. With the proposed topology, when the fault is detected and by the time mechanical contactor 801 reacts, the fault current is fully limited to an accepted level.

An advantage of the bidirectional current circuits disclosed herein is in the ability to limit inrush currents in both directions and thereby limit charging currents to a DC link capacitor without need for an additional analog or digital controller.

An advantage of the bidirectional current limiting devices disclosed herein is in the ability to limit the fault current in a distribution network or power converter when a short circuit fault occurs. With the introduction of a primary current path and an alternative current path in fault current management, steady state power loss and the number of power devices needed to manage a transient fault current is significantly reduced, which can be reflected as lower size, weight and cost of the overall current limiting circuit. Moreover, in some examples the current limiting circuit is maintained passively, hence any need for a digital or along controller or a low voltage power supply is avoided. At the system level, fault coordination with slower mechanical contactors and fuses may be provided.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A bidirectional current limiting circuit (500a-c, 700a-c, 800a,b, 900a,b) comprising first and second JFETs (501, 502) connected between first and second terminals (503, 504), wherein:
the first terminal (503) is connected to a drain of the first JFET (501) and to a gate of the second JFET (502) via a first biasing element (505, 701);
the second terminal (504) is connected to a drain of the second JFET (502) and to a gate of the first JFET (501) via a second biasing element (506, 702); and
a source of the first JFET (501) is connected to a source of the second JFET (502).

2. The bidirectional current limiting circuit (500a-c) of claim 1, wherein:
the first biasing element is a first diode (505) having an anode connected to the gate of the second JFET (502) and a cathode connected to the drain of the first JFET (501); and
the second biasing element is a second diode (506) having an anode connected to the gate of the first JFET (501) and a cathode connected to the drain of the second JFET (502).

3. The bidirectional current limiting circuit (800a,b, 900a,b) of claim 1 or claim 2, further comprising a common source resistor (601) connected between a source of the first JFET (501) and a source of the second JFET (502).

4. A bidirectional current limiting circuit (600a-c) comprising:
first and second JFETs (501, 502) connected between first and second terminals (503, 504), wherein the first terminal (503) is connected to a drain of the first JFET (501), the second terminal (504) is connected to a drain of the second JFET (502), a source of the first JFET (501) connected to a gate of the second JFET (502) and a source of the second JFET (502) connected to a gate of the first JFET (501); and
a common source resistor (601) connected between a source of the first JFET (501) and a source of the second JFET (502).

5. The bidirectional current limiting circuit (700a-c) of claim 1, wherein the first biasing element is a first resistor (701) and the second biasing element is a second resistor (702), the bidirectional current limiting circuit (700a-c) further comprising:
a third resistor (703) connected between the source of the first JFET (501) and the gate of the second JFET (502);
a fourth resistor (704) connected between the source of the second JFET (502) and the gate of the first JFET (501); and
a common source resistor (601) connected between a source of the first JFET (501) and a source of the second JFET (502).

6. The bidirectional current limiting circuit (500b,c, 600b,c, 700b,c) of any preceding claim, further comprising a bidirectional transient voltage suppressor (507) connected between the first and second terminals (503, 504).

7. The bidirectional current limiting circuit (500b,c, 600b,c, 700b,c) of claim 6, wherein the bidirectional transient voltage suppressor (507) comprises a pair of opposed avalanche diodes.

8. The bidirectional current limiting circuit (500b,c, 600b,c, 700b,c) of claim 6, wherein the bidirectional transient voltage suppressor (507) comprises a voltage-dependent resistor.

9. The bidirectional current limiting circuit (500c, 600c, 700c) of any one of claims 6 to 8, further comprising a damping resistor (508) connected in series with the bidirectional transient voltage suppressor (507).

10. The bidirectional current limiting circuit (800a,b, 900a,b) of any preceding claim, further comprising a mechanical contactor (801) connected in series with the first or second terminal (503, 504).

11. The bidirectional current limiting circuit (800a,b, 900a,b) of claim 10, further comprising a controller (802) configured to control operation of the mechanical contactor (801).

12. The bidirectional current limiting circuit (500a-c, 600a-c, 700a-c, 800a,b, 900a,b) of any preceding claim, wherein the first and second JFETs (501, 502) are n-channel JFETs.

13. An electrical power system (200, 300) comprising:
a power electronics converter (220) connected between an electrical power source (210) and an electrical load (230); and
a bidirectional current limiting circuit (500a-c, 600a-c, 700a-c, 800a,b, 900a,b) according to any preceding claim connected between the power electronics converter (220) and the electrical load (210) or between the power electronics converter (220) and the electrical power source (230).

14. The electrical power system (300) of claim 13, wherein the electrical power source comprises an AC electric machine (306), the bidirectional current limiting circuit (500a-c, 600a-c, 700a-c, 800a,b, 900a,b) connected between the power electronics converter (301) and the electrical load (310).

15. An aircraft electric power distribution system (100) comprising:
an electrical power system (200, 300) according to claim 13 or claim 14; and
a DC power distribution bus (102) connected to the DC terminals (202, 203) of the power electronics converter (220) via the bidirectional current limiting circuit (500a-c, 600a-c, 700a-c, 800a,b, 900a,b).
